# EUROPÄISCHE PATENTANMELDUNG

(11) **EP 2 911 286 A1**
(43) Veröffentlichungstag der Anmeldung: **26.08.2015**
(21) Anmeldenummer: 14155787.6
(22) Anmeldetag: 19.02.2014
(51) Int. Cl.: H02M 5/458, H02J 3/00

(54) **Einrichtung zur Einspeisung windkrafterzeugter elektrischer Energie in ein elektrisches Netz**

(71) Anmelder: Siemens Aktiengesellschaft, 80333 München (DE)
(72) Erfinder: Sahan, Benjamin, 90762 Fürth (DE); Hiller, Marc, 91207 Lauf an der Pegnitz (DE)

(57) **Zusammenfassung**

Es wird eine Einrichtung (1) zur Einspeisung windkrafterzeugter elektrischer Energie in ein elektrisches Netz (2,40) angegeben. Die Einrichtung (1) umfasst mehrere generatorseitige Gleichrichter (3), die ausgangsseitig in einer Reihenschaltung in einem Gleichstromkreis (6) angeordnet sind, wobei jeder der generatorseitigen Gleichrichter (3) eingangsseitig ohne zwischengeschalteten Transformator mit einem Generator (5) einer Windenergieanlage (60,71) verschaltet ist. Die Einrichtung (1) umfasst weiterhin einen Wechselrichter (8), der eingangsseitig im Gleichstromkreis (6) angeordnet ist. Der Gleichstromkreis (6) ist dabei in einem symmetrisch bezüglich der Reihenschaltung der generatorseitigen Gleichrichter (3) angeordneten Erdungspunkt (12) geerdet.

## Beschreibung

Die Erfindung bezieht sich auf eine Einrichtung zur Einspeisung generatorisch erzeugter, insbesondere windkrafterzeugter elektrischer Energie in ein elektrisches, energieaufnehmendes Netz.

Windenergieanlagen (WEA) tragen in stetig zunehmendem Maße zur öffentlichen Versorgung mit elektrischer Energie bei. In der üblichen Bauform umfasst eine Windenergieanlage einen Turm, an dessen Spitze eine Gondel gelagert ist. An der Gondel ist wiederum ein windgetriebener Rotor gelagert, der über eine Rotorwelle - unmittelbar oder mittelbar über ein Getriebe - einen Generator treibt.

Solche Windenergieanlagen können einzeln betrieben werden, so dass jede Windenergieanlage die von ihr erzeugte elektrische Energie separat in ein energieaufnehmendes elektrisches Netz einspeist. Zunehmend werden Windenergieanlagen allerdings in Gruppen zusammengefasst als Windpark betrieben. In diesem Fall wird die von den Windenergieanlagen des Windparks erzeugte Energie regelmäßig in einem gemeinsamen Einspeisepunkt in das Netz eingespeist. Windparks werden zunehmend in "Off-shore"-Lagen, also im ufernahen Meeresbereich, geplant.

Bei dem energieaufnehmenden Netz handelt es sich in der Regel um ein dreiphasiges Mittelspannungs-(Wechselstrom-)Netz, wie es üblicherweise zur regionalen Energieversorgung an Land eingesetzt wird. Ein solches Mittelspannungsnetz führt typischerweise eine Wechselspannung mit einem Spannungsbetrag zwischen 10 und 30 kV und einer Frequenz von 50 oder 60 Hz. Insbesondere für die Anbindung von Offshore-Windparks an das Festland werden alternativ auch Hochspannungs-Gleichstrom-Netze eingesetzt, die typischerweise eine (Gleich-)Spannung größer 100 kV führen.

Zur Einspeisung in ein Mittelspannungsnetz wird der von dem Generator einer Windenergieanlage produzierte Drehstrom üblicherweise über einen generatorseitigen Stromrichter (Gleichrichter) gleichgerichtet und über einen Spannungszwischenkreis einem netzseitigen Stromrichter (Wechselrichter), zugeführt, der einen Drehstrom mit der Frequenz des energieaufnehmenden Netzes erzeugt. Dieser Strom wird über einen auf die Netzfrequenz ausgelegten Netz-Transformator in das lokale Netz eingespeist. Die Stromrichter sind in der Regel in Niederspannungs-Zweipunkttechnik ausgeführt. Den beiden Stromrichtern sind hierbei jeweils Filter vor- bzw. nachgeschaltet.

Nachteilig bei einem solchen Energiewandlungssystem ist die große Menge an Kupfer und Eisen, die zur Realisierung der Filter, der Niederspannungskabel und des Netz-Transformators - insbesondere bei hohen Leistungen in der Größenordnung von 5 bis 8 MW - erforderlich ist. Zudem ist das elektrische Energiewandlungssystem in der Regel in der Gondel der Windenergieanlage angeordnet, was diese nachteiligerweise groß und schwer macht. Darüber hinaus ist das beschriebene Energiewandlungssystem vergleichsweise fehleranfällig, da bereits der Ausfall einer einzelnen Teilkomponente zum Stillstand der gesamten Anlage führt.

Zur Anbindung eines Offshore-Windparks mittels Hochspannungs-Gleichstromübertragung werden üblicherweise mehrere Windenergieanlagen über ein Mittelspannungs-Drehstromkabel parallelgeschaltet und zu einer seegestützten Transformatorstation geführt. Je nach Größe des Windparks können hierbei eine oder mehrere Transformatorstationen vorhanden sein. In der oder jeder Transformatorstation wird die zugelieferte Mittelspannung auf ein höheres Spannungsniveau von beispielsweise 150 kV hochtransformiert und einer ebenfalls seegestützten Konverterstation zugeführt. Durch die Konverterstation wird die gelieferte Wechselspannung dann gleichgerichtet und in das Hochspannungs-Gleichstrom-Netz eingespeist. An Land wird der Gleichstrom dann wiederum in Drehstrom umgewandelt.

In EP 2 283 233 B1 wird eine Einrichtung zur Einspeisung windkrafterzeugter elektrischer Energie in ein elektrisches Netz vorgeschlagen, bei der zwei generatorseitige Gleichrichter ausgangsseitig in einer Reihenschaltung in einem Gleichstromkreis angeordnet sind, wobei jeder dieser beiden Gleichrichter ohne zwischengeschalteten Transformator mit einer Teilwicklung eines Generators einer Windenergieanlage verschaltet ist. Problematisch bei einem solchen System ist die Isolierung der generatorseitigen Komponenten des Gleichstromkreises und insbesondere des Generators selbst, wodurch wiederum die im Gleichstromkreis führbare Spannung begrenzt wird.

Der Erfindung liegt die Aufgabe zugrunde, eine Einrichtung zur Einspeisung windkrafterzeugter elektrischer Energie in ein elektrisches Netz anzugeben, die eine effektive Energieübertragung mit vergleichsweise geringem Aufwand, insbesondere vergleichsweise geringen Herstellungskosten und vergleichsweise geringem Platzbedarf für die Komponenten der Einrichtung ermöglicht. Die Einrichtung soll dabei insbesondere vorteilhaft zur energietechnischen Anbindung von Offshore-Windparks an ein elektrisches Festlandnetz einsetzbar sein.

Diese Aufgabe wird erfindungsgemäß gelöst durch die Merkmale des Anspruchs 1. Vorteilhafte und teils für sich gesehen erfinderische Ausgestaltungsformen und Weiterentwicklungen der Erfindung sind in den Unteransprüchen und der nachfolgenden Beschreibung dargelegt.

Die erfindungsgemäße Einrichtung umfasst mehrere generatorseitige Gleichrichter, die ausgangsseitig in einer Reihenschaltung in einem Gleichstromkreis angeordnet sind. Jeder der generatorseitigen Gleichrichter ist hierbei eingangsseitig ohne zwischengeschalteten Transformator mit einem Generator einer Windenergieanlage verschaltet. Die Einrichtung umfasst des Weiteren einen Wechselrichter, der eingangsseitig - wiederum in Reihe zu der Reihenschaltung der generatorseitigen Gleichrichter - in den Gleichstromkreis geschaltet ist. Der Gleichstromkreis ist in einem Erdungspunkt geerdet. Erfindungsgemäß ist dieser Erdungspunkt symmetrisch innerhalb der Reihenschaltung angeordnet. Unter "symmetrischer Anordnung des Erdungspunktes" wird hierbei verstanden, dass die Reihenschaltung beidseitig des Erdungspunktes (also minuspotentialseitig und pluspotentialseitig des Erdungspunktes) jeweils eine gleiche Anzahl von aufgereihten Gleichrichtern umfasst.

Vorzugsweise umfasst die Reihenschaltung hierbei eine gerade Anzahl von Gleichrichtern, insbesondere zwei, vier oder sechs Gleichrichter, wobei der Erdungspunkt zwischen den beiden mittleren Gleichrichtern der Reihenschaltung vorgesehen ist. Grundsätzlich kann die Reihenschaltung im Rahmen der Erfindung aber auch eine ungerade Anzahl von Gleichrichtern umfassen. In diesem Fall ist die symmetrische Erdung dadurch erzielt, dass der Erdungspunkt auf ein Mittenpotential des mittleren Gleichrichters der Reihenschaltung gelegt ist.

Die vorstehend beschriebene Reihenschaltung von generatorseitigen Gleichrichtern ist nachfolgend auch als "Strang" bezeichnet. Ein und derselbe Gleichstromkreis kann hierbei im Rahmen der Erfindung einen oder auch mehrere solcher Stränge umfassen, wobei in letzterem Fall die mehreren Stränge jeweils parallel zueinander mit demselben Wechselrichter verschaltet sind. Ein mehrere Stränge umfassender Gleichstromkreis wird nachfolgend auch als "Cluster" bezeichnet.

Durch die symmetrische Erdung des oder jedes Strangs wird die innerhalb eines der Generatoren anliegende Spannung gegenüber Erde - unter Annahme von zumindest näherungsweise gleichen Leistungseinträgen durch jeden der Generatoren - auf etwa die Hälfte derjenigen Spannung begrenzt, die im Gleichstromkreis über dem Wechselrichter anliegt. Hierdurch kann bei gegebener (Spannungs-)Belastbarkeit der Generatoren die im Gleichstromkreis erzeugbare Spannung maximiert werden.

Vorzugsweise ist der Wechselrichter als Modularer Mehrpunkt-Stromrichter (auch als Modularer Multilevel-Stromrichter oder M2C-Stromrichter bezeichnet) ausgebildet, wie er beispielsweise aus A. Lesnicar und R. Marquardt, "An innovative modular multilevel converter topology suitable for a wide power range", In Power Tech Conference Proceedings, 2003 IEEE Bologna, vol.3, S.6ff., 2003 bekannt ist. Die Verwendung des M2C-Stromrichters als Wechselrichter im Gleichstromkreis der erfindungsgemäßen Einrichtung hat insbesondere den Vorteil, dass ein Netzfilter zwischen dem Wechselrichter und dem Netz sowie generatorseitige Filter (du/dt-Filter) nicht erforderlich sind. Diese Filter sind daher in bevorzugter Ausführung der Einrichtung auch nicht vorgesehen. Durch den Einsatz des M2C-Stromrichters als Wechselrichter wird zudem auch eine hohe Verfügbarkeit (Ausfallsicherheit) und eine sichere Beherrschung besonders hoher Spannungen im Gleichstromkreis ermöglicht. Insbesondere ist durch den modularen Aufbau des M2C-Stromrichters baubedingt nahezu ausgeschlossen, dass es bei einem Ausfall einer elektronischen Komponente des Wechselrichters zu einem Kurzschluss innerhalb des Gleichstromkreises oder zu einem Spannungsüberschlag zwischen dem Gleichstromkreis und dem Ausgang des Wechselrichters kommt.

Mindestens einer der generatorseitigen Gleichrichter ist in bevorzugter Ausführung der Einrichtung als Vierquadrantensteller ausgebildet, so dass bedarfsweise auch Leistung aus dem Gleichstromkreis an den jeweils vorgeschalteten Generator zurückgespeist werden kann. Dies ermöglicht insbesondere, im Zusammenhang mit der Einrichtung wahlweise Synchron-Generatoren als auch Asynchron-Generatoren einzusetzen. In besonders zweckmäßiger Ausführung der Einrichtung ist mindestens einer der generatorseitigen Gleichrichter ebenfalls als M2C-Stromrichter ausgebildet. Vorzugsweise sind alle generatorseitigen Gleichrichter als M2C-Stromrichter ausgebildet.

Zur Vermeidung von Isolationsproblemen in den Generatoren, und somit zur Realisierung einer besonders hohen Spannung im Gleichstromkreis ist vorzugsweise jeder der generatorseitigen Gleichrichter mit einem eigenen, separaten Generator verschaltet. Somit sind insbesondere nicht mehrere Gleichrichter mit mehreren Teilwicklungen desselben Generators verschaltet. Gleichwohl können im Rahmen der Erfindung allerdings mindestens zwei der Generatoren durch einen gemeinsamen Rotor einer (also derselben) Windenergieanlage angetrieben werden. Diese Generatoren können dabei im Rahmen der Erfindung wahlweise durch eine starre Rotorwelle unmittelbar oder durch ein Getriebe mittelbar gekoppelt sein.

In einer bevorzugten Ausgestaltungsvariante ist die erfindungsgemäße Einrichtung zur Einspeisung von Energie in ein Mittelspannungs-(Wechselstrom-)Netz vorgesehen. In diesem Fall ist der Wechselrichter ausgangsseitig ohne zwischengeschalteten (Netz-)Transformator, vorzugsweise allerdings über eine Netzdrossel mit dem Netz verschaltet. Somit werden einerseits der für den Netztransformator üblicherweise erforderliche Material-und Herstellungsaufwand als auch der für den Netztransformator üblicherweise vorzusehende Bauraum eingespart. Insbesondere der letztgenannte Aspekt stellt unter widrigen Umgebungsbedingungen - insbesondere in Offshore-Lagen - einen erheblichen Vorteil dar. Zudem werden auch die mit einem Netztransformator üblicherweise verbundenen Leistungsverluste eingespart.

In einer alternativen Ausgestaltung ist die Einrichtung zum Anschluss an ein Hochspannungs-Gleichstrom-Netz vorgesehen. In diesem Fall umfasst die Einrichtung in bevorzugter Ausgestaltung eine Transformatoreinheit sowie einen nachgeschalteten netzseitigen Gleichrichter, über die der Wechselrichter mit dem Netz verbunden ist. Vorzugsweise ist die Transformatoreinheit hierbei auf eine Mittelfrequenz ausgelegt, wodurch die Transformatoreinheit wesentlich kompakter realisierbar ist als ein herkömmlicher Netztransformator. Als "Mittelfrequenz" wird hierbei eine Frequenz bezeichnet, die mindestens das Zweifache der üblichen Netzfrequenz beträgt. Bei einer üblichen Netzfrequenz von 50 Hz oder 60 Hz ist die vorstehend beschriebene (Mittelfrequenz-)Transformatoreinheit daher vorzugsweise auf mindestens 100 bzw. 120 Hz ausgelegt. Vorzugsweise ist die Mittelfrequenz-Transformatoreinheit auf eine Frequenz zwischen 150 Hz und 250 Hz ausgelegt.

In einer zweckmäßigen Ausführungsform umfasst die Mittelfrequenz-Transformatoreinheit einen Mehrwicklungstransformator, der seinerseits eine Anzahl von Primärwicklungen und eine demgegenüber größere (insbesondere mehrfache) Anzahl von Sekundärwicklungen zur Erzeugung phasenversetzter Sekundärströme umfasst. Beispielsweise umfasst die Mittelfrequenz-Transformatoreinheit in dieser Ausführung ein dreiphasiges Primärwicklungssystem, das mit dem Wechselrichter verschaltet ist, und ein sechsphasiges Sekundärwicklungssystem, das mit dem netzseitigen Gleichrichter verschaltet ist. Der netzseitige Gleichrichter ist hierbei als - entsprechend der Anzahl der Sekundärströme - mehrpulsiger Gleichrichter ausgebildet. Bei einem - wie vorstehend erwähnt - sechsphasigen Sekundärwicklungssystem der Mittelfrequenz-Transformatoreinheit ist der netzseitige Gleichrichter entsprechend als sechspulsiger Gleichrichter ausgebildet. Der netzseitige Gleichrichter ist in diesem Fall zweckmäßigerweise durch eine Reihenschaltung von zwei herkömmlichen, jeweils dreiphasigen Gleichrichtern gebildet. Der Einsatz eines mehrpulsigen Gleichrichters dient hierbei insbesondere zur besseren Glättung der in das Netz eingespeisten Spannung, ohne hierzu ein dem Gleichrichter nachgeschaltetes Netzfilter einsetzen zu müssen.

Insbesondere bei einer Ausgestaltungsform der Einrichtung, die für den Einsatz bei einem größeren Windpark vorgesehen ist, umfasst die Mittelfrequenz-Transformatoreinheit vorzugsweise zwei in Reihe geschaltete - insbesondere örtlich getrennte - Transformatorstufen, nämlich eine generatorseitige Transformatorstufe und eine netzseitige Transformatorstufe. Durch die beiden in Reihe geschalteten Transformatorstufen wird die in dem Gleichspannungskreis geführte Spannung stufenweise auf den Spannungswert des Hochspannungs-Gleichstrom-Netzes hochtransformiert, wobei zwischen den Transformatorstufen ein mittleres Spannungsniveau realisiert wird. Dieses mittlere Spannungsniveau dient hierbei insbesondere zur Sammlung der von mehreren Gleichspannungskreisen (das heißt einzelnen Strängen oder Clustern) abgegebenen Energie. Diese mehreren Gleichspannungskreise sind hierbei - über einen jeweils zugeordneten Wechselrichter - mit einer gemeinsamen netzseitigen Transformatorstufe verschaltet.

Verkörperungen der Erfindung sind ferner eine Windenergieanlage sowie ein Windpark mit mehreren Windenergieanlagen.

Die erfindungsgemäße Windenergieanlage umfasst einen windgetriebenen Rotor, mehrere (direkt oder indirekt über ein Getriebe) damit gekoppelte Generatoren sowie die erfindungsgemäße Einrichtung in einer der vorstehend beschriebenen Ausführungsformen.

Der erfindungsgemäße Windpark umfasst mehrere Windenergieanlagen. Jede dieser Windenergieanlagen umfasst hierbei jeweils einen windgetriebenen Rotor sowie mindestens einen damit gekoppelten Generator. Der Windpark umfasst weiterhin wiederum die erfindungsgemäße Einrichtung in einer der vorstehend beschriebenen Ausgestaltungsvarianten.

Nachfolgend werden Ausführungsbeispiele der Erfindung anhand einer Zeichnung näher erläutert. Darin zeigen:

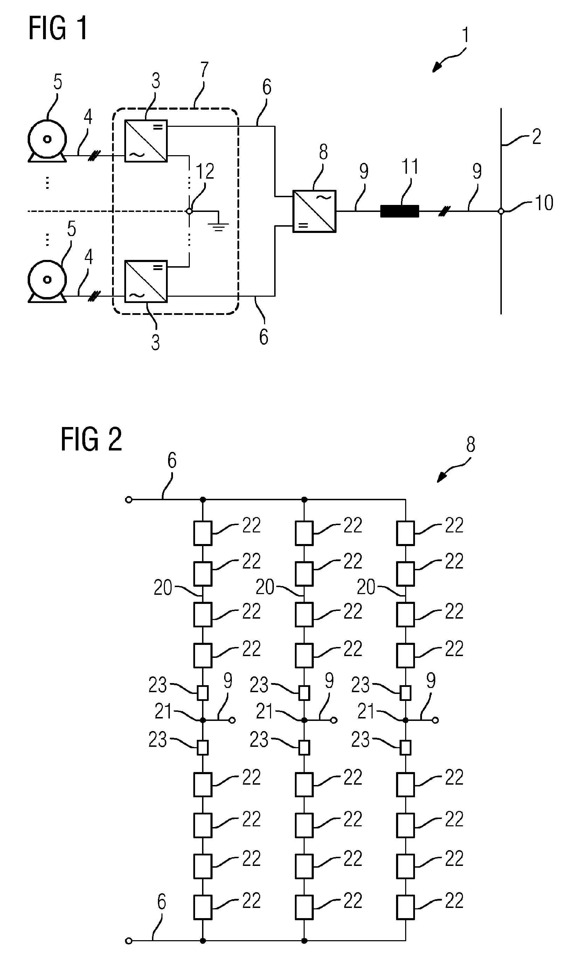

- FIG 1: in einem schematischen Blockschaltbild eine Einrichtung zur Einspeisung windkrafterzeugter Energie in ein elektrisches Netz, das hier durch ein Mittelspannungs-(Wechselstrom-)Netz gebildet ist, mit mehreren ausgangsseitig in Reihe in einen Gleichstromkreis geschalteten Gleichrichtern, von denen jeder jeweils einem Generator einer Windenergieanlage nachschaltet ist, und mit einem eingangsseitig in den Gleichstromkreis geschalteten Wechselrichter, wobei der Wechselrichter ausgangsseitig über eine Netzdrossel mit dem Netz verbunden ist,
- FIG 2: in einem schematischen Blockschaltbild den als Modularer Mehrpunkt-Stromrichter (M2C-Stromrichter) ausgebildeten Wechselrichter gemäß FIG 1,

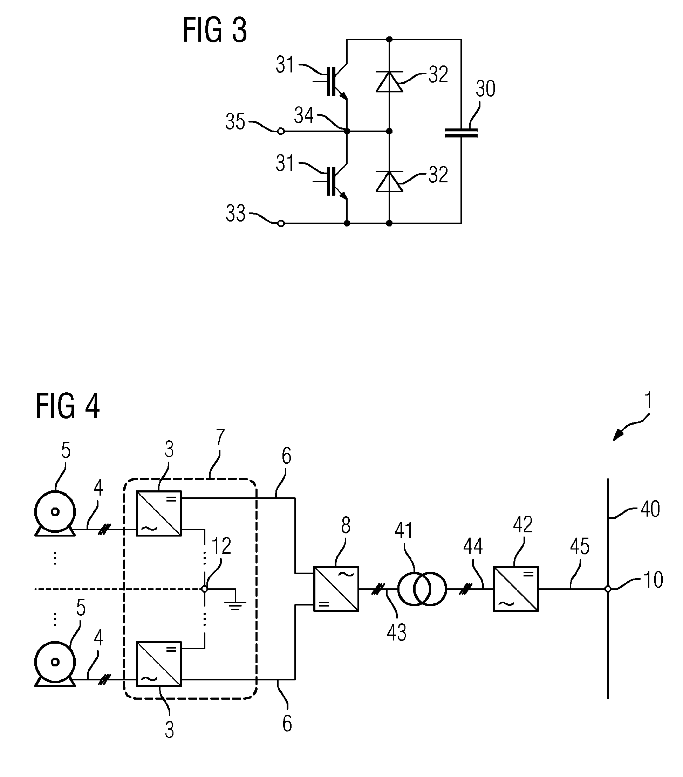

- FIG 3: in einem elektrischen Schaltbild ein Submodul des Wechselrichters gemäß FIG 1,
- FIG 4: in Darstellung gemäß FIG 1 eine Ausführungsform der Einrichtung zur Einspeisung windkrafterzeugter Energie in ein Hochspannungs-Gleichstrom-Netz, wobei der Wechselrichter ausgangsseitig über eine Mittelfrequenz-Transformatoreinheit und einen netzseitigen Gleichrichter mit dem Netz verbunden ist,

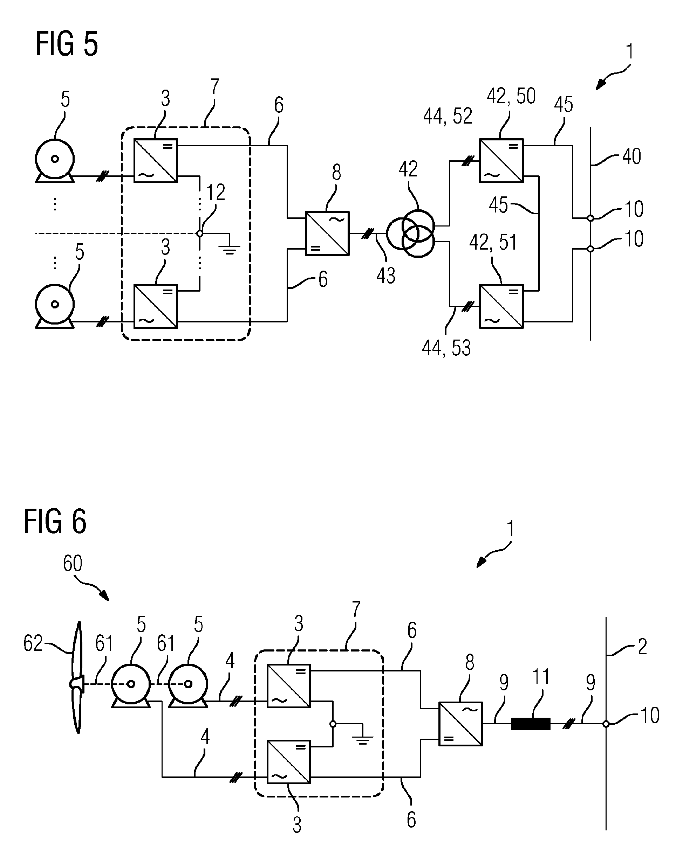

- FIG 5: in Darstellung gemäß FIG 4 eine Variante der dortigen Einrichtung, bei der die Mittelfrequenz-Transformatoreinheit als Mehr-Wicklungs-Transformator zur Erzeugung von sechs phasenversetzten Sekundärströmen, und der netzseitige Gleichrichter als sechspulsiger Gleichrichter ausgebildet sind,
- FIG 6: in einem schematischen Blockschaltbild eine einzeln betriebene Windenergieanlage mit zwei Generatoren und einer zugeordneten Einrichtung gemäß FIG 1,

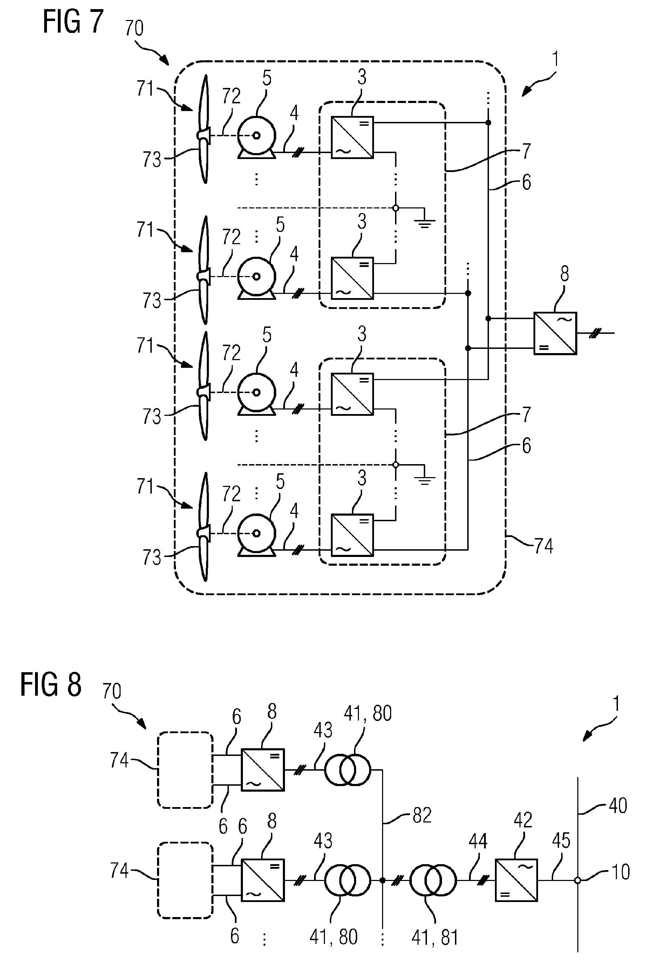

- FIG 7: in Darstellung gemäß FIG 6 einen Teil eines Windparks mit mehreren Windenergieanlagen und mit einer zugeordneten Einrichtung gemäß FIG 1, 4 oder 5, wobei jede Windenergieanlage einen Generator umfasst, wobei die den Generatoren nachgeschalteten Gleichrichter ausgangsseitig zu mehreren Reihenschaltungen (Strängen) zusammengeschaltet sind, und wobei diese Stränge innerhalb des Gleichstromkreises unter Bildung eines Clusters parallel zueinander mit einem gemeinsamen Wechselrichter verschaltet sind, und
- FIG 8: in einem schematischen Blockschaltbild einen Windpark mit mehreren Clustern gemäß FIG 7, wobei dem Wechselrichter eines jeden Clusters jeweils eine erste Transformatorstufe einer zweistufigen MittelfrequenzTransformatoreinheit nachgeschaltet ist, und wobei alle Cluster gemeinsam mit einer zweiten Transformatorstufe der Mittelfrequenz-Transformatoreinheit verschaltet sind.

Einander entsprechende Teile und Größen sind in allen Figuren stets mit gleichen Bezugszeichen versehen.

FIG 1 zeigt eine Einrichtung 1 zur Einspeisung von windkrafterzeugter elektrischer Energie in ein energieaufnehmendes elektrisches Netz, bei dem es sich in der Ausführung gemäß FIG 1 um ein (Mittelspannungs-Wechselstrom-)Netz 2 handelt.

Die Einrichtung 1 umfasst mehrere (beispielsweise sechs) Gleichrichter 3, von denen in FIG 1 der besseren Übersichtlichkeit halber lediglich zwei dargestellt sind. Jeder der Gleichrichter 3 ist eingangsseitig - ohne zwischengeschalteten Transformator - über eine dreiphasige Generatorzuleitung 4 mit einem vorgeschalteten Generator 5 einer (hier nicht näher dargestellten) Windenergieanlage verschaltet. Die Gleichrichter 3 sind daher nachfolgend auch als generatorseitige Gleichrichter 3 bezeichnet. Die generatorseitigen Gleichrichter 3 und die Generatoren 5 sind einander paarweise zugeordnet. Alle Gleichrichter 3 ist somit jeweils verschiedenen Generatoren 5 zugeordnet, und ebenso ist jedem Generator 5 ein eigener, separater Gleichrichter 3 zugeordnet.

Ausgangsseitig sind die Gleichrichter 3 in Reihe in einen Gleichstromkreis 6 geschaltet. Die Reihenschaltung der Gleichrichter 3 ist hierbei nachfolgend auch als Strang 7 bezeichnet.

Über den Gleichstromkreis 6 ist dieser Strang 7 mit den Eingängen eines Wechselrichters 8 verbunden. Ausgangsseitig ist dieser Wechselrichter 8 über eine dreiphasige (Wechselstrom-) Einspeiseleitung 9 mit dem Netz 2 verbunden. Der Anschluss der Einspeiseleitung 9 an das Netz 2 ist nachfolgend auch als Einspeisepunkt 10 der Einrichtung 1 bezeichnet.

Im Betrieb der Einrichtung 1 speist jeder der Generatoren 5 eine frequenzveränderliche Wechselspannung mit einem variierenden Spannungsbetrag von bis zu ca. 10 kV in die Generatorzuleitung 4 ein. Durch die Reihenschaltung der Gleichrichter 3 wird hierdurch im Gleichstromkreis eine Gleichspannung mit einem Spannungsbetrag von 30-40 kV erzeugt.

Über den Wechselrichter 8 wird die im Gleichstromkreis 6 gesammelte elektrische Leistung unmittelbar, also ohne zwischengeschalteten Netztransformator, in das Netz 2 eingespeist. Der Wechselrichter 8 gibt somit ausgangsseitig eine Wechselspannung aus, die hinsichtlich Frequenz und Spannungsbetrag der in dem Netz 2 geführten Netzspannung entspricht. In der Einspeiseleitung 9 ist lediglich eine Netzdrossel 11 zur Stabilisierung der von dem Wechselrichter 8 ausgegebenen Wechselspannung angeordnet.

Der Gleichstromkreis 6 ist in einem Erdungspunkt 12 geerdet. Dieser Erdungspunkt 12 ist hierbei symmetrisch bezüglich der Reihenschaltung der Gleichrichter 3 angeordnet. Mit anderen Worten ist der Erdungspunkt 12 derart angeordnet, dass innerhalb des Strangs 7 eine gleiche Anzahl von Gleichrichtern 3 hochpotentialseitig und niederpotentialseitig des Erdungspunktes 12 in Reihe geschaltet sind. Wenn der Strang 7 sechs in Reihe geschaltete Gleichrichter 3 umfasst, ist der Erdungspunkt 12 also derart angeordnet, dass drei der sechs Gleichrichter 3 niederpotentialseitig des Erdungspunktes 12, und die übrigen drei Gleichrichter 3 hochpotentialseitig des Erdungspunktes 12 angeordnet sind.

Der Wechselrichter 8 ist als modularer Mehrpunkt-Stromrichter (nachfolgend kurz: M2C-Stromrichter) ausgebildet, wie er schematisch in FIG 2 abgebildet ist.

In dieser Ausführungsform umfasst der Wechselrichter 8 drei Phasenstränge 20, die parallel zueinander in den Gleichstromkreis 7 geschaltet sind. Innerhalb eines jeden der Phasenstränge 20 umfasst der Wechselrichter 8 beidseitig (also sowohl hochpotentialseitig als auch niederpotentialseitig) eines jeweiligen Mittelabgriffs 21 jeweils eine Reihenschaltung von Submodulen 22. In der beispielhaften Ausführung gemäß FIG 2 sind hierbei in jedem Phasenstrang 20 sowohl hochpotentialseitig als auch niederpotentialseitig des jeweiligen Mittelabgriffs 21 jeweils vier Submodule 22 in Reihe geschaltet. Dem jeweiligen Mittelabgriff 21 und den Submodulen 22 des jeweiligen Phasenstrangs 20 ist hierbei - wiederum sowohl hochpotentialseitig als auch niederpotentialseitig - jeweils eine Drossel 23 zwischengeschaltet. Die Mittelabgriffe 21 der Phasenstränge 20 sind mit der Einspeiseleitung 9 verschaltet.

Eines der identischen Submodule 22 ist in FIG 3 näher dargestellt. Wie dieser Darstellung zu entnehmen ist, umfasst jedes der Submodule 22 eine - durch einen oder mehrere Kondensatoren gebildete - Kapazität 30 sowie zwei in Reihe geschaltete Halbleiterschalter 31 (beispielsweise in Form von MOS-FET) wobei jedem Halbleiterschalter 31 eine Freilaufdiode 32 parallelgeschaltet ist. Die Reihenschaltung der Halbleiterschalter 31 und Freilaufdioden 32 ist hierbei parallel zu der Kapazität 30 geschaltet. Jedes Submodul 22 ist über einen, mit dem Minuspol der Kapazität 30 verschalteten Minus-Port 34 sowie über einen mit einem Mittelabgriff 34 zwischen den Halbleiterschaltern 31 verbundenen Plus-Port 35 in den jeweils zugehörigen Phasenstrang 20 geschaltet. In Hinblick auf die an sich bekannte Funktionsweise des M2C-Stromrichters wird auf A. Lesnicar und R. Marquardt, "An innovative modular multilevel converter topology suitable for a wide power range", In Power Tech Conference Proceedings, 2003 IEEE Bologna, vol.3, S.6ff., 2003 Bezug genommen.

Auch die generatorseitigen Gleichrichter 5 sind vorzugsweise als M2C-Stromrichter ausgebildet. Jeder der Gleichrichter 3 hat in dieser Ausführungsform einen Aufbau analog zu FIG 2, wobei an die Mittelabgriffe 21 abweichend von FIG 2 anstelle der Einspeiseleitung 9 die jeweilige Generatorzuleitung 4 angeschlossen ist. Desweiteren kann die Anzahl der in den Phasensträngen 20 in Reihe geschalteten Submodule 22 von der Darstellung gemäß FIG 2 abweichen. Insbesondere können die Gleichrichter 3 in ihren Phasensträngen 20 jeweils eine geringere Anzahl von in Reihe geschalteten Submodulen 22 aufweisen als der Wechselrichter 8.

FIG 4 zeigt eine Variante der Einrichtung 1, die zur Einspeisung elektrischer Energie in das hier als Hochspannungs-Gleichstrom-Netz 40 ausgebildete Netz ausgebildet ist. Anstelle der Einspeiseleitung 9 aus FIG 1 sind dem Wechselrichter 8 und dem Einspeisepunkt 10 gemäß FIG 4 eine (Mittelfrequenz-)Transformatoreinheit 41 und ein Gleichrichter 42 zwischengeschaltet. Bei der Transformatoreinheit 41 handelt es sich im Ausführungsbeispiel gemäß FIG 4 um einen einzelnen, dreiphasigen Transformator, der für eine Mittelfrequenz von beispielsweise 150 Hz ausgelegt ist. Der Gleichrichter 42 ist zur besseren Unterscheidung von den generatorseitigen Gleichrichtern 3 auch als netzseitiger Gleichrichter 42 bezeichnet. Der Gleichrichter 42 ist vorzugsweise als Diodengleichrichter ausgebildet. Alternativ hierzu kann der Gleichrichter 42 allerdings auch in einer anderen Bauart, insbesondere als M2C-Stromrichter ausgebildet sein.

Ein Primärwicklungssystem der Transformatoreinheit 41 ist über einen dreiphasigen Primärkreis 43 mit den Ausgängen des Wechselrichters 8, und über einen dreiphasigen Sekundärkreis 44 mit den Eingängen des Gleichrichters 42 verbunden. Der Gleichrichter 42 ist wiederum über eine (Gleichstrom-)Einspeiseleitung 45 mit dem Netz 40 verbunden.

In dem Primärkreis 43 wird von dem Wechselrichter 8 eine dreiphasige Wechselspannung mit der der Auslegung der Transformatoreinheit 41 zugrundegelegten Mittelfrequenz (z.B. 150 Hz) und einem Spannungsbetrag von 30-50 kV erzeugt. Durch die Transformatoreinheit 41 wird diese Wechselspannung auf einen Spannungsbetrag von 150 bis 300 kV hochtransformiert und in den Sekundärkreis 44 eingespeist. Der Gleichrichter 42 erzeugt in der Einspeiseleitung 45 eine Gleichspannung, die dem Betrag nach der im Netz 40 geführten Gleichspannung entspricht.

FIG 5 zeigt wiederum eine Variante der Einrichtung 1 gemäß FIG 4. Im Unterschied zu der dortigen Ausführung der Einrichtung 1 ist die Mittelfrequenz-Transformatoreinheit 41 hier als Mehrwicklungstransformator ausgeführt, der ein dreiphasiges Primärwicklungssystem und ein sechsphasiges Sekundärwicklungssystem umfasst. Entsprechend ist bei der Ausführung gemäß FIG 5 auch der nachgeschaltete Gleichrichter 42 sechspulsig ausgebildet.

In der konkreten Ausführung gemäß FIG 5 umfasst das Sekundärwicklungssystem der Transformatoreinheit 41 zwei jeweils dreiphasige Teilwicklungssysteme. Der Gleichrichter 41 ist aus zwei, jeweils dreiphasigen Teilgleichrichtern 50 und 51 gebildet. Die beiden Teilwicklungssysteme sind hierbei über Teilkreise 52 und 53 des Sekundärkreises 44 mit jeweils einem der Teilgleichrichter 50 und 51 verschaltet und erzeugen in diesen Teilkreisen 52 und 53 sechs relativ zueinander phasenversetzte Sekundärströme. Die Teilgleichrichter 51 und 52 sind ausgangsseitig in Reihe in die Einspeiseleitung 44 geschaltet.

FIG 6 zeigt eine Anwendung der Einrichtung 1 bei einer einzeln betriebenen Windenergieanlage 60. Die Einrichtung 1 kommt hierbei in der Bauform gemäß FIG 1 zur Anwendung, wobei der einzige Strang 7 des Gleichstromkreises 6 zwei in Reihe geschaltete Gleichrichter 3 umfasst.

Die Windenergieanlage 60 umfasst zwei Generatoren 5, die im dargestellten Ausführungsbeispiel über eine gemeinsame Rotorwelle 61 mit einem windgetriebenen Rotor 62 starr gekoppelt sind. Alternativ hierzu können die beiden Generatoren 5 allerdings auch mittelbar über ein Getriebe mit dem Rotor 62 gekoppelt sein.

FIG 7 zeigt eine alternative Anwendung der Einrichtung 1 bei einem Windpark 70, der eine Vielzahl von einzelnen Windenergieanlagen 71 umfasst. Hinsichtlich der Netzanbindung kann die Einrichtung 1 hierbei grundsätzlich - entsprechend der Variante gemäß FIG 1 - zur Einspeisung in ein Mittelspannungs-Wechselstrom-Netz 2 vorgesehen sein. Vorzugsweise ist die Einrichtung 1 aber - entsprechend einer der übrigen Ausführungsvarianten - zur Einspeisung in ein Hochspannungs-Gleichstrom-Netz 40 ausgebildet.

In der Ausführung gemäß FIG 7 ist jeder der Generatoren 5 einer Windenergieanlage 71 zugeordnet und über eine Rotorwelle 72 - wiederum unmittelbar oder mittelbar über ein Getriebe - mit einem windgetriebenen Rotor 73 der Windenergieanlage 71 gekoppelt. Abweichend von den vorstehend beschriebenen Ausführungen der Einrichtung 1 sind die generatorseitigen Gleichrichter 3 der Einrichtung 1 hier in mehrere Stränge 7 gegliedert, von denen in FIG 7 der besseren Übersichtlichkeit halber lediglich zwei dargestellt sind. Jeder Strang 7 enthält hierbei analog zu den vorstehend beschriebenen Ausführungsformen der Einrichtung 1 wiederum eine Reihenschaltung von zwei bis sechs Gleichrichtern 3. Die mehreren Stränge 7 sind ihrerseits in Parallelschaltung in den Gleichstromkreis 6 eingebunden und über diesen Gleichstromkreis 6 mit dem gemeinsamen Wechselrichter 8 verbunden. Der mehrsträngige Gleichstromkreis 6 gemäß FIG 7 wird auch als Cluster 74 bezeichnet.

Gemäß FIG 8 kann ein Windpark 70 auch mehrere Cluster 74 der vorstehend beschriebenen Art umfassen. Um - insbesondere bei einem über eine große Fläche verteilten Windpark 70 - eine besonders verlustarme Energieübertragung zu gewährleisten, kommt hierbei vorzugsweise eine zur Energieeinspeisung in ein Hochspannungs-Gleichstrom-Netz 40 ausgebildete Variante der Einrichtung 1 zum Einsatz. In einer speziellen Bauform der Einrichtung 1 ist hierbei gemäß FIG 8 die Mittelfrequenz-Transformatoreinheit 41 zweistufig ausgebildet und umfasst pro Cluster 74 eine erste Transformatorstufe 80. Die Mittelfrequenz-Transformatoreinheit 41 umfasst des Weiteren eine gemeinsame zweite Transformatorstufe 81. Die ersten Transformatorstufen 80 sind hierbei zweckmäßigerweise in verteilten Transformatorstationen jeweils am Ort des zugehörigen Clusters 74 lokalisiert, während die zweite Transformatorstufe 81 zusammen mit dem nachgeschalteten Gleichrichter 42 in einer zentralen Konverterstation angeordnet ist.

Die mehreren Transformatorstufen 80 sind in Parallelschaltung über einen dreiphasigen Zwischenkreis 82 mit der Transformatorstufe 81 verbunden. Durch die ersten Transformatorstufen 80 wird die von dem jeweiligen Wechselrichter 8 des zugeordneten Clusters 74 ausgegebene Wechselspannung auf ein mittleres Spannungsniveau von beispielsweise 100 bis 150 kV hochtransformiert. Durch die zweite Transformatorstufe 81 wird diese Spannung dann wiederum auf ein netzkompatibles Spannungsniveau von 300 bis 650 kV transformiert.

Die Erfindung wird anhand der vorstehend beschriebenen Ausführungsbeispiels besonders deutlich, ist gleichwohl auf diese Ausführungsbeispiele aber nicht beschränkt. Vielmehr können weitere Ausführungsformen der Erfindung aus den Ansprüchen und der vorstehenden Beschreibung abgeleitet werden. Insbesondere können die anhand der Ausführungsbeispiele beschriebenen Einzelmerkmale der Erfindung im Rahmen der Ansprüche auch in abgewandelter Zusammenstellung eingesetzt werden, ohne den Rahmen der Erfindung zu verlassen.

## Patentansprüche

1. Einrichtung (1) zur Einspeisung generatorisch erzeugter, insbesondere windkrafterzeugter elektrischer Energie in ein elektrisches Netz (2,40),
- mit mehreren generatorseitigen Gleichrichtern (3), die ausgangsseitig in einer Reihenschaltung in einem Gleichstromkreis (6) angeordnet sind, wobei jeder der generatorseitigen Gleichrichter (3) eingangsseitig ohne zwischengeschalteten Transformator mit einem Generator (5) einer Windenergieanlage (60,71) verschaltet ist,
- mit einem Wechselrichter (8), der eingangsseitig im Gleichstromkreis (6) angeordnet ist,
wobei der Gleichstromkreis (6) in einem symmetrisch bezüglich der Reihenschaltung der generatorseitigen Gleichrichter (3) angeordneten Erdungspunkt (12) geerdet ist.

2. Einrichtung (1) nach Anspruch 1, wobei der Wechselrichter (8) als Modularer Mehrpunkt-Stromrichter ausgebildet ist.

3. Einrichtung (1) nach Anspruch 1 oder 2, wobei mindestens einer der generatorseitigen Gleichrichter (3) als Vierquadrantensteller ausgebildet ist.

4. Einrichtung (1) nach einem der Ansprüche 1 bis 3, wobei mindestens einer der generatorseitigen Gleichrichter (3) als Modularer Mehrpunkt-Stromrichter ausgebildet ist.

5. Einrichtung (1) nach einem der Ansprüche 1 bis 4, wobei mindestens zwei der Generatoren (5) durch einen gemeinsamen Rotor (62,73) einer Windenergieanlage (60,61) angetrieben werden, insbesondere durch eine gemeinsame Rotorwelle (61,72) gekoppelt sind.

6. Einrichtung (1) nach einem der Ansprüche 1 bis 5, wobei mehrere Reihenschaltungen von generatorseitigen Gleichrichtern (3) parallel zueinander mit einem gemeinsamen Wechselrichter (8) verschaltet sind.

7. Einrichtung (1) nach einem der Ansprüche 1 bis 6, wobei das Netz (2) ein Mittelspannungs-Wechselstrom-Netz ist, und wobei der Wechselrichter (8) ausgangsseitig über eine Netzdrossel (11) ohne zwischengeschalteten Transformator mit dem Netz (2) verschaltet ist.

8. Einrichtung (1) nach einem der Ansprüche 1 bis 6, wobei das Netz (40) ein Hochspannungs-Gleichstrom-Netz ist, und wobei der Wechselrichter (8) ausgangsseitig über eine Mittelfrequenz-Transformatoreinheit (41) und einen netzseitigen Gleichrichter (42) mit den Netz (40) verbunden ist.

9. Einrichtung (1) nach Anspruch 8, wobei die Mittelfrequenz-Transformatoreinheit (42) einen Mehr-Wicklungs-Transformator mit einer Anzahl von Primärwicklungen und einer demgegenüber größeren Anzahl von Sekundärwicklungen zur Erzeugung phasenversetzter Sekundärströme umfasst, und wobei der netzseitige Gleichrichter (42) als entsprechend der Anzahl der Sekundärströme mehrpulsiger Gleichrichter ausgebildet ist.

10. Einrichtung (1) nach einem der Ansprüche 7 bis 9, wobei die Mittelfrequenz-Transformatoreinheit (41) zwei in Reihe geschaltete Transformatorstufen (80,81), nämlich eine generatorseitige Transformatorstufe (80) und eine netzseitige Transformatorstufe (81) umfasst, und wobei mehrere Gleichspannungskreise (6) mit einer gemeinsamen netzseitigen Transformatorstufe (81) verschaltet sind.

11. Windenergieanlage (60) mit einem Rotor (62), mit mehreren damit gekoppelten Generatoren (5) sowie mit einer Einrichtung (1) nach einem der Ansprüche 1 bis 10.

12. Windpark (70) mit mehreren Windenergieanlagen (71), von denen jede jeweils einen Rotor (72) sowie mindestens einen damit gekoppelten Generator (5) umfasst, sowie mit einer Einrichtung (1) nach einem der Ansprüche 1 bis 10.
